(19) Europäisches Patentamt / European Patent Office / Office européen des brevets

(11) **EP 4 582 476 A1**

(12) **EUROPEAN PATENT APPLICATION**
published in accordance with Art. 153(4) EPC

(43) Date of publication:
**09.07.2025 Bulletin 2025/28**

(21) Application number: 23877247.9

(22) Date of filing: **06.10.2023**

(51) International Patent Classification (IPC):
*C08L 9/00* (2006.01)     *B60C 1/00* (2006.01)
*C08K 3/22* (2006.01)     *C08K 3/36* (2006.01)
*C08K 5/548* (2006.01)     *C08L 9/06* (2006.01)
*C08L 25/02* (2006.01)     *C08L 57/02* (2006.01)

(52) Cooperative Patent Classification (CPC):
B60C 1/00; C08K 3/22; C08K 3/36; C08K 5/548;
C08L 9/00; C08L 9/06; C08L 25/02; C08L 57/02;
Y02T 10/86

(86) International application number:
**PCT/JP2023/036568**

(87) International publication number:
**WO 2024/080243 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022 JP 2022165322**

(71) Applicant: **The Yokohama Rubber Co., Ltd.**
**Hiratsuka-shi, Kanagawa 254-8601 (JP)**

(72) Inventor: **HIJIKATA Kensuke**
**Hiratsuka-shi, Kanagawa 254-8601 (JP)**

(74) Representative: **Dilg, Haeusler, Schindelmann**
**Patentanwaltsgesellschaft mbH**
**Leonrodstraße 58**
**80636 München (DE)**

(54) **TIRE RUBBER COMPOSITION**

(57)     Provided is a rubber composition for a tire capable of enhancing wet grip performance without impairing wear resistance and improving operability thereof. Per 100 parts by mass of a diene rubber, from 3 parts by mass to 100 parts by mass of an aromatic hydrocarbon resin satisfying conditions of the following Formulas (1) and (2), and from 30 parts by mass to 300 parts by mass of silica having a nitrogen adsorption specific surface area $N_2SA$ of from 100 $m^2/g$ to 300 $m^2/g$ are blended (in Formulas, Tg is a glass transition temperature (unit: °C), Mw is a weight average molecular weight, and Mn is a number average molecular weight).

$$Tg > 36 \times Mw/Mn + 22 \ldots (1)$$

$$Mw > 3000 \ldots (2)$$

**Description**

Technical Field

The present invention relates to a rubber composition for a tire intended mainly for use in a tread portion of a tire.

Background Art

In a rubber composition for a tire constituting a tread portion of a tire (for example, a racing tire or a tire for a passenger vehicle), a large amount of high specific surface area filler or high softening point resin is blended in order to improve a gripping force (wet grip performance) on wet road surfaces (see, for example, Patent Document 1). However, when a large amount of high specific surface area filler is blended, there is a concern that strength at break deteriorates, and accordingly, wear resistance thus deteriorates when used in a tire. In addition, when a large amount of high softening point resin is blended, a glass transition temperature increases, and rubber hardness at a low temperature increases, and accordingly, there is a concern that operability (in addition, warm-up performance in the case of a racing tire) of the grip performance on wet road surfaces decreases when used in a tire. Thus, measures to enhance the wet grip performance without impairing the wear resistance and to improve the operability thereof are required.

Citation List

Patent Document

Patent Document 1: JP 5503159 B

Summary of Invention

Technical Problem

An object of the present invention is to provide a rubber composition for a tire capable of enhancing wet grip performance without impairing wear resistance and improving operability thereof.

Solution to Problem

The rubber composition for a tire of the present invention that achieves the aforementioned object is characterized by including, per 100 parts by mass of a diene rubber: from 3 parts by mass to 100 parts by mass of an aromatic hydrocarbon resin satisfying conditions of the following Formulas (1) and (2); and from 30 parts by mass to 300 parts by mass of silica having a nitrogen adsorption specific surface area $N_2SA$ of from 100 $m^2/g$ to 300 $m^2/g$:

$$Tg > 36 \times Mw/Mn + 22 \ldots (1)$$

$$Mw > 3000 \ldots (2)$$

(where Tg is a glass transition temperature [unit: °C], Mw is a weight average molecular weight, and Mn is a number average molecular weight).

Advantageous Effects of Invention

Since the rubber composition for a tire of the present invention uses the aromatic hydrocarbon resin satisfying the conditions as specified by Formulas (1) and (2), wet grip performance can be enhanced while suppressing deterioration of wear resistance associated with the blending of the resin, and operability thereof can be improved.

In the present invention, 30 mass% or more of a modified styrene-butadiene rubber having a functional group having reactivity with a silanol group on a surface of the silica is preferably contained in 100 mass% of the diene rubber. This makes it possible to enhance dispersibility of silica, which is advantageous for improving the wet grip performance.

In the present invention, from 2 mass% to 20 mass% of a silane coupling agent with respect to silica, the silane coupling agent containing a polysiloxane represented by an average compositional formula of the following General Formula (3), is preferably blended. Accordingly, the wet grip performance can be enhanced without impairing the wear resistance, and the effect of improving the operability can be further enhanced.

$$(A)_a(B)_b(C)_c(D)_d(R^1)_eSiOC_{(4-2a-b-c-d-e)/2} \cdots \qquad (3)$$

(In Formula (3), A represents a divalent organic group containing a sulfide group, B represents a monovalent hydrocarbon group having from 5 to 10 carbons, C represents a hydrolyzable group, D represents an organic group containing a mercapto group, $R^1$ represents a monovalent hydrocarbon group having from 1 to 4 carbons, and a to e are real numbers satisfying relationship formulas: $0 \leq a < 1$, $0 < b < 1$, $0 < c < 3$, $0 \leq d < 1$, $0 \leq e < 2$, and $0 < 2a + b + c + d + e < 4$.)

In the present invention, a liquid aromatic vinyl-conjugated diene rubber having a glass transition temperature of -40°C or higher is preferably contained. Accordingly, the wet grip performance can be enhanced without impairing the wear resistance, and the effect of improving the operability can be further enhanced.

In the present invention, it is preferable to blend 15 parts by mass or more of aluminum hydroxide per 100 parts by mass of the diene rubber. Blending aluminum hydroxide in this manner is advantageous for improving the wet grip performance.

Description of Embodiments

In the rubber composition for a tire of the present invention, the rubber component is diene rubber. As the diene rubber, a type generally used for the rubber composition for a tire (in particular, a rubber composition constituting a tread portion of a racing tire or a tire for a passenger vehicle) can be used. In the present invention, styrene-butadiene rubber is particularly preferably contained as the diene rubber. When the diene rubber contains the styrene-butadiene rubber, the blended amount is preferably from 60 mass% to 100 mass%, and more preferably from 80 mass% to 100 mass%, in 100 mass% of the diene rubber. By containing the styrene-butadiene rubber, the wet grip performance can be enhanced without impairing the wear resistance. Other diene rubbers can be blended together with the styrene-butadiene rubber. As other diene rubbers, a rubber that is generally used in a rubber composition for a tire such as natural rubber, isoprene rubber, and butadiene rubber can be used. These other diene rubbers may be used alone or as a discretionary blend.

When a styrene-butadiene rubber is used as the diene rubber, it is particularly preferable to use a modified styrene-butadiene rubber in which both or one of molecular terminals is modified with a functional group having reactivity with a silanol group on a surface of the silica. Examples of the functional group having reactivity with a silanol group include at least one type selected from a hydroxyl group-containing polyorganosiloxane structure, an alkoxysilyl group, a hydroxyl group, an aldehyde group, a carboxyl group, an amino group, an imino group, an epoxy group, an amide group, a thiol group, and an ether group. Among them, a hydroxyl group and an amino group can be suitably used. By using such a modified styrene-butadiene rubber, dispersibility of silica described later can be enhanced, which is advantageous for improving the wet grip performance.

The modified styrene-butadiene rubber described above can enhance the dispersibility of silica as the content in the diene rubber is higher, which is advantageous for improving the wet grip performance. Specifically, the content of the modified styrene-butadiene rubber described above is preferably 30 mass% or more, more preferably 50 mass% or more, and still more preferably 70 mass% or more, in 100 mass% of the diene rubber. When the content of the modified styrene-butadiene rubber is 30 mass% or more, the effect of enhancing the dispersibility of silica is obtained, and the wet grip performance can be sufficiently improved.

In the rubber composition for a tire of the present invention, an aromatic hydrocarbon resin satisfying the conditions of the following Formulas (1) and (2) is necessarily blended. By blending such an aromatic hydrocarbon resin, the wet grip performance can be effectively enhanced.

$$Tg > 36 \times Mw/Mn + 22 \ldots (1)$$

$$Mw > 3000 \ldots (2)$$

(In the formulas, Tg is a glass transition temperature [unit: °C], Mw is a weight average molecular weight, and Mn is a number average molecular weight.)

In the present specification, the glass transition temperature Tg can be determined as a temperature at the midpoint of a transition region observed in a thermogram measured by differential scanning calorimetry (DSC) at a temperature increase rate of 20°C/minute. The weight average molecular weight Mw and the number average molecular weight Mn can be measured as molecular weights by gel permeation chromatography (GPC) calibrated with polystyrene under the following conditions.

Measuring apparatus: GPC (ALC/GPC 150C) available from Waters Corporation
Column: Three columns of AD806M/S available from Showa Denko K.K.

Mobile phase type: Ortho-dichlorobenzene (ODCB)
Flow rate of mobile phase: 1.0 mL/minute
Measurement temperature: 140°C
Detector type: MIRAN 1A IR detector (measurement wavelength: 3.42 $\mu$m) available from The Foxboro Co.

When Formula (1) is not satisfied, that is, when the relationship Tg $\leq$ 36 $\times$ Mw/Mn + 22 is satisfied, the wet grip performance cannot be enhanced. When Formula (2) is not satisfied, that is, when the relationship Mw $\leq$ 3000 is satisfied, initial operability of the wet grip performance cannot be enhanced. In addition, a desired effect cannot be obtained only by satisfying one of Formulas (1) or (2).

The blended amount of the aromatic hydrocarbon resin satisfying the conditions of Formulas (1) and (2) is from 3 parts by mass to 100 parts by mass, preferably from 10 parts by mass to 85 parts by mass, and more preferably from 15 parts by mass to 70 parts by mass, per 100 parts by mass of the diene rubber. When the blended amount of the aromatic hydrocarbon resin is less than 3 parts by mass, the effect of improving a gripping force deteriorates. When the blended amount of the aromatic hydrocarbon resin is more than 100 parts by mass, the operability and the wear resistance are deteriorated. A plurality of aromatic hydrocarbon resins satisfying the conditions of Formulas (1) and (2) may be used in combination. When the plurality of aromatic hydrocarbon resins are used in combination, it is preferable that a total of the blended amounts satisfies the aforementioned range.

The aromatic hydrocarbon resin satisfying the conditions of Formulas (1) and (2) can be used in combination with another resin not satisfying the conditions of Formulas (1) and/or (2). As another resin, a type generally used for the rubber composition for a tire can be used. When the aromatic hydrocarbon resin satisfying the conditions of Formulas (1) and (2) is used in combination with another resin, the blended amount of the aromatic hydrocarbon resin satisfying the conditions of Formulas (1) and (2) is preferably from 5 parts by mass to 85 parts by mass, and more preferably from 10 parts by mass to 70 parts by mass per 100 parts by mass of the diene rubber. On the other hand, the blended amount of another resin is preferably from 5 parts by mass to 85 parts by mass, and more preferably 10 parts by mass to 70 parts by mass per 100 parts by mass of the diene rubber. However, the total of the blended amounts of these resins is preferably from 10 parts by mass to 150 parts by mass, and more preferably from 20 parts by mass to 120 parts by mass per 100 parts by mass of the diene rubber.

The value of the glass transition temperature Tg of the aromatic hydrocarbon resin is not particularly limited as long as Formula (1) is satisfied, and is preferably from 30°C to 130°C, and more preferably from 50°C to 120°C. The value of the weight average molecular weight Mw of the aromatic hydrocarbon resin is not particularly limited as long as the value satisfies Formula (2), and the value is preferably from 3000 to 18000 and more preferably from 5000 to 15000. In addition, the ratio Mw/Mn of the weight average molecular weight Mw to the number average molecular weight Mn is not particularly limited, and can be set in a range of from 0.5 to 3.0, for example.

The aromatic hydrocarbon resin is not particularly limited as long as it satisfies Formulas (1) and (2), and a petroleum resin composed of a C9 component (aromatic component), for example, a C9 petroleum resin (aromatic petroleum resin obtained by polymerizing fractions such as $\alpha$-methylstyrene, o-vinyltoluene, m-vinyltoluene, and p-vinyltoluene) is preferable. Among them, a C9 petroleum resin containing $\alpha$-methylstyrene as a main component is preferable. The resin composed of $\alpha$-methylstyrene thus purified can increase the weight average molecular weight Mw and the glass transition temperature Tg.

Silica is always blended in the rubber composition for a tire of the present invention. The blended amount of the silica is from 30 parts by mass to 300 parts by mass, preferably from 50 parts by mass to 250 parts by mass, and more preferably from 70 parts by mass to 200 parts by mass, per 100 parts by mass of the diene rubber. Such blending of a sufficient amount of silica is advantageous for improving the wet grip performance. When the blended amount of the silica is less than 30 parts by mass, the wear resistance deteriorates. When the blended amount of silica is more than 300 parts by mass, the wear resistance and the operability deteriorate.

The silica used in the present invention has a nitrogen adsorption specific surface area $N_2SA$ of from 100 m$^2$/g to 300 m$^2$/g, preferably from 130 m$^2$/g to 250 m$^2$/g. When the nitrogen adsorption specific surface area $N_2SA$ of the silica is less than 100 m$^2$/g, a reinforcing property for the rubber composition becomes insufficient, and the wear resistance deteriorates. When the nitrogen adsorption specific surface area $N_2SA$ of silica is more than 300 m$^2$/g, the dispersibility of silica is lowered, and rolling resistance deteriorates. The nitrogen adsorption specific surface area $N_2SA$ of silica is determined in accordance with JIS K6217-2.

The silica used in the present invention may be a silica having the properties described above and may be selected appropriately from commercially available products or produced with an ordinary method so as to have the properties described above. Types of silica that can be used include wet method silica, dry method silica, surface treated silica, and the like.

The rubber composition for a tire of the present invention can contain another filler besides the silica. Examples of another filler include materials typically used for a rubber composition for a tire, such as carbon black, clay, talc, calcium carbonate, mica, and aluminum hydroxide.

Among them, aluminum hydroxide is preferably used in combination. The use of aluminum hydroxide is advantageous for improving the wet grip performance. When aluminum hydroxide is used in combination, the blended amount of aluminum hydroxide is preferably 15 parts by mass or more, and more preferably from 20 parts by mass to 70 parts by mass per 100 parts by mass of the diene rubber. When the blended amount of aluminum hydroxide is less than 15 parts by mass, further improvement in wet grip performance cannot be expected.

In addition, carbon black may be used in combination as the filler. By using carbon black in combination, the wear resistance can be improved. When carbon black is used in combination, the blended amount thereof is not particularly limited, and can be set to, for example, from 10 parts by mass to 40 parts by mass per 100 parts by mass of the diene rubber described above.

In the rubber composition for a tire of the present invention, a silane coupling agent is preferably used in combination when the silica described above is blended. By blending the silane coupling agent, the dispersibility of the silica in the diene rubber can be improved. As the silane coupling agent, a silane coupling agent containing polysiloxane represented by an average compositional formula of the following General Formula (3) can be suitably used.

$$(A)_a(B)_b(C)_c(D)_d(R^1)_e SiO_{(4-2a-b-c-d-e)/2} \cdots \quad (3)$$

(In Formula (3), A represents a divalent organic group containing a sulfide group, B represents a monovalent hydrocarbon group having from 5 to 10 carbons, C represents a hydrolyzable group, D represents an organic group containing a mercapto group, $R^1$ represents a monovalent hydrocarbon group having from 1 to 4 carbons, and a to e are real numbers satisfying the relationship formulas: $0 \leq a < 1$, $0 < b < 1$, $0 < c < 3$, $0 \leq d < 1$, $0 \leq e < 2$, and $0 < 2a + b + c + d + e < 4$.)

The polysiloxane (mercaptosilane compound) having the average compositional formula represented by General Formula (3) described above has a siloxane backbone as its backbone. The siloxane backbone may be a straight-chain, branched, or three-dimensional structure, or a combination of these.

In General Formula (3) described above, at least one of a or b is not 0. That is, at least one of a or b may be greater than 0, and both a and b may be greater than 0. Thus, the polysiloxane necessarily contains at least one selected from a divalent organic group A containing a sulfide group and a monovalent hydrocarbon group B having from 5 to 10 carbons.

When the silane coupling agent containing the polysiloxane having the average compositional formula represented by General Formula (3) described above has the monovalent hydrocarbon group B having from 5 to 10 carbons, the mercapto group is protected, a Mooney scorch time is prolonged, and at the same time, affinity with rubber is excellent, so that processability is more excellent. Thus, the subscript b of the hydrocarbon group B in General Formula (3) may $0.10 \leq b \leq 0.89$. Specific examples of the hydrocarbon group B include a monovalent hydrocarbon group having preferably from 6 to 10 carbons, and more preferably from 8 to 10 carbons, which for example, include a hexyl group, an octyl group, and a decyl group. This can allow protection of the mercapto group, extension of Mooney scorch time, and achievement of better processability, and better low heat build-up.

When the silane coupling agent containing the polysiloxane having the average compositional formula represented by General Formula (3) described above contains the divalent organic group A containing a sulfide group, low heat build-up, and processability (especially sustenance and prolongation of Mooney scorch time) are further improved. Thus, the subscript a of the divalent organic group A containing a sulfide group in General Formula (5) is preferably $0 < a \leq 0.50$.

In the divalent organic group A containing a sulfide group, in General Formula (3) described above, n represents an integer of from 1 to 10, and is particularly preferably an integer of from 2 to 4. x is an integer of from 1 to 6, among which an integer of from 2 to 4 is preferable. The organic group A may be, for example, a hydrocarbon group optionally having a hetero atom such as an oxygen atom, a nitrogen atom, or a sulfur atom.

The silane coupling agent comprising polysiloxane having the average compositional formula represented by General Formula (3) described above has excellent affinity and/or reactivity with silica due to having a hydrolyzable group C. The subscript c of the hydrolyzable group C in General Formula (3) preferably satisfies $1.2 \leq c \leq 2.0$ for the reason that better low heat build-up and processability are achieved and better dispersibility of the silica is achieved. Specific examples of the hydrolyzable group C include an alkoxy group, a phenoxy group, a carboxyl group, and an alkenyloxy group. From the perspective of achieving good dispersibility of silica and better processability, the hydrolyzable group C is preferably a group represented by the following General Formula (4).

$$*\text{-}OR^2 \cdots \quad (4)$$

In General Formula (4) described above, * represents a bonding position. Furthermore, $R^2$ represents an alkyl group having from 1 to 20 carbons, an aryl group having from 6 to 10 carbons, an aralkyl group (arylalkyl group) having from 6 to 10 carbons, or an alkenyl group having from 2 to 10 carbons. Among these, an alkyl group having from 1 to 5 carbons is preferred.

Specific examples of the alkyl group having from 1 to 20 carbons include a methyl group, an ethyl group, a propyl group, a butyl group, a hexyl group, an octyl group, a decyl group, and an octadecyl group. Specific examples of the aryl group having from 6 to 10 carbons include a phenyl group, and a tolyl group. Specific examples of the aralkyl group having from 6 to 10 carbons include a benzyl group, and a phenylethyl group. Specific examples of the above-described alkenyl group having from 2 to 10 carbons include a vinyl group, a propenyl group, and a pentenyl group.

Since the silane coupling agent containing polysiloxane having the average compositional formula represented by General Formula (3) described above has an organic group D containing a mercapto group, the silane coupling agent can interact and/or react with the diene rubber, and thus excellent low heat build-up is achieved. The subscript d of the organic group D containing a mercapto group preferably satisfies $0.1 \leq d \leq 0.8$. From the perspective of achieving good dispersibility of silica and even better processability, the organic group D containing a mercapto group is preferably a group represented by the following General Formula (5).

$$*\text{-}(CH_2)_m\text{-}SH \ldots \qquad (5)$$

In General Formula (5) described above, m represents an integer of from 1 to 10, and particularly preferably an integer of from 1 to 5. In the formula, * represents a bonding position.

Specific examples of the group represented by General Formula (5) described above include $*\text{-}CH_2SH$, $*\text{-}C_2H_4SH$, $*\text{-}C_3H_6SH$, $*\text{-}C_4H_8SH$, $*\text{-}C_5H_{10}SH$, $*\text{-}C_6H_{12}SH$, $*\text{-}C_7H_{14}SH$, $*\text{-}C_8H_{16}SH$, $*\text{-}C_9H_{18}SH$, and $*\text{-}C_{10}H_{20}SH$.

In General Formula (3) described above, $R^1$ represents a monovalent hydrocarbon group having from 1 to 4 carbons. Examples of the hydrocarbon group $R^1$ include a methyl group, an ethyl group, a propyl group, and a butyl group.

The blended amount of the silane coupling agent may be from 2 mass% to 20 mass%, and preferably from 5 mass% to 16 mass%, with respect to the mass of silica. The dispersion of silica can be improved by setting the blended amount of the silane coupling agent to 2 mass% or more of the silica content. When the blended amount of the silane coupling agent is 20 mass% or less of the silica content, condensation between the silane coupling agents is suppressed, and a rubber composition having desired hardness and strength can be obtained. As a result, when the rubber composition is used in a tread portion of the tire, the wet grip performance can be enhanced without impairing the wear resistance, and the operability can be improved.

The rubber composition for a tire of the present invention can contain a liquid polymer as a plasticizer component. In particular, it is preferable to use a liquid polymer described later instead of the oil generally used as the plasticizer component in the rubber composition for a tire. Specifically, as the liquid polymer, a liquid aromatic vinyl-conjugated diene rubber having a glass transition temperature of preferably -40°C or higher, more preferably from - 30°C to -5°C may be used. By blending the plasticizer component in this manner, the wear resistance can be improved. When the glass transition temperature of the liquid polymer is lower than -40°C, the wet grip may be lowered. When the liquid polymer is blended, the blended amount thereof is preferably from 10 parts by mass to 40 parts by mass, and more preferably from 15 parts by mass to 35 parts by mass, per 100 parts by mass of the diene rubber. When the blended amount of the liquid polymer is less than 10 parts by mass, there is a possibility that an additional effect (further improvement of wear resistance) obtained by using the liquid polymer cannot be sufficiently expected. When the blended amount of the liquid polymer is more than 40 parts by mass, the wear resistance may deteriorate.

In addition to the components described above, the rubber composition for a tire may also contain various compounding agents that are commonly used in a rubber composition for a tire, in accordance with an ordinary method. Examples of the compounding agents include a vulcanization or crosslinking agent, a vulcanization accelerator, an anti-aging agent, a processing aid, and a thermosetting resin. These compounding agents can be kneaded by a common method to obtain a rubber composition that can then be used for vulcanization or crosslinking. These compounding agents can be blended in an amount commonly used in the related art so long as the object of the present invention is not hindered. The rubber composition for a tire can be prepared by mixing the above-mentioned components using a known rubber kneading machine such as a Banbury mixer, a kneader, or a roller.

The rubber composition for a tire of the present invention is suitable for forming a tread portion of a tire for a passenger vehicle or a racing tire. The tire thus obtained can exhibit excellent wet grip performance without impairing the wear resistance, and can have good operability. The tire to which the rubber composition for a tire of the present invention is used is preferably a pneumatic tire (a tire inflated with the air, an inert gas such as nitrogen, or another gas in its inner portion) but may also be a non-pneumatic tire. Also in the case of a non-pneumatic tire, the rubber composition for a tire of the present invention is preferably used for a portion (tread portion in a pneumatic tire) that abuts against a road surface.

The present invention will further be described below by way of Examples, but the scope of the present invention is not limited to the Examples.

Example

For preparation of 40 types of rubber compositions for a tire (Standard Examples 1 to 2, Comparative Examples 1-1 to 4 and 2-1 to 2-5, and Examples 1-1 to 11 and 2-1 to 2-16) having formulations listed in Tables 1 to 3, blending components other than a vulcanization accelerator and sulfur were weighed and kneaded in a 1.8 L sealed Banbury mixer for 5 minutes. The resultant master batch was then discharged and cooled at room temperature. Thereafter, the master batch was added into the 1.8 L sealed Banbury mixer, and the vulcanization accelerator and sulfur were added and mixed for 2 minutes. Thus, each of the rubber compositions for a tires was obtained.

In Table 4, in resins 1 to 6 used in each example, the glass transition temperature Tg (unit: °C), the right-hand side ($36 \times Mw/Mn + 22$) of Formula (1), and the weight average molecular weight Mw are collectively presented. When the value presented in the row of the glass transition temperature Tg (unit: °C) exceeds the value presented in the row of the right-hand side of Formula (1), it means that Formula (1) is satisfied. When the value listed in the row of the weight average molecular weight Mw is more than 3000, it means that Formula (2) is satisfied.

Using the obtained rubber composition, a vulcanized rubber sheet was prepared by vulcanization at 160°C for 20 minutes in a mold of 15 cm × 15 cm × 0.2 cm, and tanδ at 100°C, hardness at 100°C, and strength at break at 100°C were measured by the following methods, and used as indices of grip performance, steering stability, and wear resistance.

Wet grip performance (tanδ at 0°C)

Using a viscoelastic spectrometer, available from Toyo Seiki Seisakusho, Ltd., dynamic visco-elasticity of the vulcanized rubber sheet obtained was measured at an initial strain of 10%, an amplitude of ±2%, and a frequency of 20 Hz, and the tanδ at 0°C was determined. The obtained results are presented on the "Wet grip performance" rows of Tables 1 to 3 as index values, with a value of Standard Example 1 being 100 for Table 1 and with a value of Standard Example 2 being 100 for Tables 2 to 3. The larger the index value, the higher the tanδ at 0°C, which means that the wet grip performance (that is, grip performance on wet road surfaces) when the tire is formed is excellent.

Operability (hardness at 20°C)

The hardness of the obtained vulcanized rubber sheet was measured at a temperature of 20°C with a type A durometer in accordance with JIS K 6253. The obtained results are presented on the "Operability" rows of Tables 1 to 3 as index values, with a value of Standard Example 1 being 100 for Table 1 and with a value of Standard Example 2 being 100 for Tables 2 to 3. The smaller the index value, the lower the hardness at 20°C, which means that the initial operability on the wet road surfaces is excellent.

Wear resistance (strength at break at 20°C)

Using the obtained vulcanized rubber sheet, a JIS No. 3 dumbbell test piece was cut out in accordance with JIS K 6251, and tensile strength at break at 20°C (room temperature) was measured in accordance with JIS K 6251. The obtained results are presented on the "Wear resistance" rows of Tables 1 to 3 as index values, with a value of Standard Example 1 being 100 for Table 1 and with a value of Standard Example 2 being 100 for Tables 2 to 3. The larger the index value, the higher the strength at break at 20°C, which means that the wear resistance is excellent when a tire is formed.

EP 4 582 476 A1

[Table 1]

| | | Standard Example 1 | Comparative Example 1-1 | Example 1-2 | Comparative Example 1-3 | Comparative Example 1-4 | Example 1-1 | Example 1-2 | Example 1-3 | Example 1-4 | Example 1-5 | Example 1-6 | Example 1-7 | Example 1-8 | Example 1-9 | Example 1-10 | Example 1-11 |
|---|---|---|---|---|---|---|---|---|---|---|---|---|---|---|---|---|---|
| SBR-1 | Parts by mass | 137.5 | 137.5 | 137.5 | 137.5 | 137.5 | 137.5 | | 137.5 | 137.5 | 137.5 | 137.5 | | 137.5 | 137.5 | 137.5 | 137.5 |
| SBR-2 | Parts by mass | | | | | | | 137.5 | | | | | 137.5 | | | | |
| Silica-1 | Parts by mass | 70 | | 70 | 70 | 70 | 70 | 70 | 70 | 70 | 70 | 70 | 70 | 70 | 70 | 70 | 70 |
| Silica-2 | Parts by mass | | 70 | | | | | | | | | | | | | | |
| CB | Parts by mass | 10 | 10 | 10 | 10 | 10 | 10 | 10 | 10 | 10 | 10 | 10 | 10 | 10 | 10 | 10 | 10 |
| Aluminum hydroxide | Parts by mass | | | | | | | | | | 20 | | | | | 20 | 15 |
| Resin-1 | Parts by mass | 30 | 30 | | | | | | | | | | | | | | |
| Resin-2 | Parts by mass | | | 30 | | | | | | | | | | | | | |
| Resin-3 | Parts by mass | | | | 30 | | | | | | | | | | | | |
| Resin-4 | Parts by mass | | | | | 30 | | | | | | | | | | | |

(continued)

| | | Standard Example 1 | Comparative Example 1-1 | Example 1-2 | Comparative Example 1-3 | Comparative Example 1-4 | Example 1-1 | Example 1-2 | Example 1-3 | Example 1-4 | Example 1-5 | Example 1-6 | Example 1-7 | Example 1-8 | Example 1-9 | Example 1-10 | Example 1-11 |
|---|---|---|---|---|---|---|---|---|---|---|---|---|---|---|---|---|---|
| Resin-5 | Parts by mass | | | | | | 30 | 30 | 30 | 30 | 30 | | | | | | |
| Resin-6 | Parts by mass | | | | | | | | | | | 30 | 30 | 30 | 30 | 30 | 30 |
| Silane coupling agent-1 | Parts by mass | 5.6 | 5.6 | 5.6 | 5.6 | 5.6 | 5.6 | 5.6 | | | | 5.6 | 5.6 | | | | |
| Silane coupling agent-2 | Parts by mass | | | | | | | | 5.6 | 5.6 | 5.6 | | | 5.6 | 5.6 | 5.6 | 5.6 |
| Liquid polymer | Parts by mass | | | | | | | | | 20 | 20 | | | | 20 | 20 | 20 |
| Oil | Parts by mass | 20 | 20 | 20 | 20 | 20 | 20 | 20 | 20 | | | 20 | 20 | 20 | | | |
| Stearic acid | Parts by mass | 2 | 2 | 2 | 2 | 2 | 2 | 2 | 2 | 2 | 2 | 2 | 2 | 2 | 2 | 2 | 2 |
| Zinc oxide | Parts by mass | 2 | 2 | 2 | 2 | 2 | 2 | 2 | 2 | 2 | 2 | 2 | 2 | 2 | 2 | 2 | 2 |
| Anti-aging agent | Parts by mass | 2 | 2 | 2 | 2 | 2 | 2 | 2 | 2 | 2 | 2 | 2 | 2 | 2 | 2 | 2 | 2 |
| Vulcanization accelerator-1 | Parts by mass | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |

| | | Standard Example 1 | Comparative Example 1-1 | Example 1-2 | Comparative Example 1-3 | Comparative Example 1-4 | Example 1-1 | Example 1-2 | Example 1-3 | Example 1-4 | Example 1-5 | Example 1-6 | Example 1-7 | Example 1-8 | Example 1-9 | Example 1-10 | Example 1-11 |
|---|---|---|---|---|---|---|---|---|---|---|---|---|---|---|---|---|---|
| Vulcanization accelerator-2 | Parts by mass | 2 | 2 | 2 | 2 | 2 | 2 | 2 | 2 | 2 | 2 | 2 | 2 | 2 | 2 | 2 | 2 |
| Sulfur | Parts by mass | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Wet grip performance | Index value | 100 | 103 | 110 | 105 | 106 | 108 | 112 | *115* | 118 | 123 | 111 | 116 | 116 | 120 | 126 | 124 |
| Operability | Index value | 100 | 93 | 112 | 96 | 97 | 97 | 95 | 96 | 98 | 99 | 98 | 97 | 95 | 97 | 98 | 98 |
| Wear resistance | Index value | 100 | 94 | 104 | 97 | 98 | 107 | 110 | 105 | 107 | 105 | 110 | 112 | 110 | 109 | 106 | 107 |

EP 4 582 476 A1

[Table 2]

| | | Standard Example 2 | Comparative Example 2-1 | Comparative Example 2-2 | Comparative Example 2-3 | Comparative Example 2-4 | Example 2-1 | Example 2-2 | Example 2-3 | Example 2-4 | Example 2-5 | Example 2-6 | Comparative Example 2-5 |
|---|---|---|---|---|---|---|---|---|---|---|---|---|---|
| SBR-1 | Parts by mass | 137.5 | 137.5 | 137.5 | 137.5 | 137.5 | 137.5 | | 137.5 | 137.5 | 137.5 | 137.5 | 137.5 |
| SBR-2 | Parts by mass | | | | | | | 137.5 | | | | | |
| Silica-1 | Parts by mass | 150 | | 150 | 150 | 150 | 150 | 150 | 150 | 150 | 150 | 150 | 150 |
| Silica-2 | Parts by mass | | 150 | | | | | | | | | | |
| CB | Parts by mass | 10 | 10 | 10 | 10 | 10 | 10 | 10 | 10 | 10 | 10 | 10 | 10 |
| Aluminum hydroxide | Parts by mass | | | | | | | | | | 20 | | |
| Resin-1 | Parts by mass | 60 | 60 | | | | | | | | | | |
| Resin-2 | Parts by mass | | | 60 | | | | | | | | | |
| Resin-3 | Parts by mass | | | | 60 | | | | | | | | |
| Resin-4 | Parts by mass | | | | | 60 | | | | | | | |

EP 4 582 476 A1

| | | Standard Example 2 | Comparative Example 2-1 | Comparative Example 2-2 | Comparative Example 2-3 | Comparative Example 2-4 | Example 2-1 | Example 2-2 | Example 2-3 | Example 2-4 | Example 2-5 | Example 2-6 | Comparative Example 2-5 |
|---|---|---|---|---|---|---|---|---|---|---|---|---|---|
| Resin-5 | Parts by mass | | | | | | 60 | 60 | 60 | 60 | 60 | 100 | 120 |
| Resin-6 | Parts by mass | | | | | | | | | | | | |
| Silane coupling agent-1 | Parts by mass | 12 | 12 | 12 | 12 | 12 | 12 | 12 | | | | 12 | 12 |
| Silane coupling agent-2 | Parts by mass | | | | | | | | 12 | 12 | 12 | | |
| Liquid polymer | Parts by mass | | | | | | | | | 20 | 20 | | |
| Oil | Parts by mass | 20 | 20 | 20 | 20 | 20 | 20 | 20 | 20 | | | 20 | 20 |
| Stearic acid | Parts by mass | 2 | 2 | 2 | 2 | 2 | 2 | 2 | 2 | 2 | 2 | 2 | 2 |
| Zinc oxide | Parts by mass | 2 | 2 | 2 | 2 | 2 | 2 | 2 | 2 | 2 | 2 | 2 | 2 |
| Anti-aging agent | Parts by mass | 2 | 2 | 2 | 2 | 2 | 2 | 2 | 2 | 2 | 2 | 2 | 2 |
| Vulcanization accelerator-1 | Parts by mass | 1.5 | 1.5 | 1.5 | 1.5 | 1.5 | 1.5 | 1.5 | 1.5 | 1.5 | 1.5 | 1.5 | 1.5 |

(continued)

| | | Standard Example 2 | Comparative Example 2-1 | Comparative Example 2-2 | Comparative Example 2-3 | Comparative Example 2-4 | Example 2-1 | Example 2-2 | Example 2-3 | Example 2-4 | Example 2-5 | Example 2-6 | Comparative Example 2-5 |
|---|---|---|---|---|---|---|---|---|---|---|---|---|---|
| Vulcanization accelerator-2 | Parts by mass | 2 | 2 | 2 | 2 | 2 | 2 | 2 | 2 | 2 | 2 | 2 | 2 |
| Sulfur | Parts by mass | 1.5 | 1.5 | 1.5 | 1.5 | 1.5 | 1.5 | 1.5 | 1.5 | 1.5 | 1.5 | 1.5 | 1.5 |
| Wet grip performance | Index value | 100 | 108 | 118 | 109 | 111 | 115 | 123 | 128 | 131 | 148 | 132 | 141 |
| Operability | Index value | 100 | 87 | 121 | 94 | 95 | 95 | 93 | 92 | 96 | 99 | 100 | 105 |
| Wear resistance | Index value | 100 | 90 | 106 | 94 | 98 | 115 | 121 | 113 | 114 | 103 | 100 | 95 |

[Table 3]

| | | Example 2-7 | Example 2-8 | Example 2-9 | Example 2-10 | Example 2-11 | Example 2-12 | Example 2-13 | Example 2-14 | Example 2-15 | Example 2-16 |
|---|---|---|---|---|---|---|---|---|---|---|---|
| SBR-1 | Parts by mass | 137.5 | 137.5 | 137.5 | | 137.5 | 137.5 | 137.5 | 137.5 | 137.5 | 137.5 |
| SBR-2 | Parts by mass | | | | 137.5 | | | | | | |
| Silica-1 | Parts by mass | 150 | 150 | 150 | 150 | 150 | 150 | 150 | 150 | 150 | 150 |
| Silica-2 | Parts by mass | | | | | | | | | | |
| CB | Parts by mass | 10 | 10 | 10 | 10 | 10 | 10 | 10 | 10 | 10 | 10 |
| Aluminum hydroxide | Parts by mass | | | | | | | 20 | | | 15 |
| Resin-1 | Parts by mass | 20 | 60 | | | | | | | | |
| Resin-2 | Parts by mass | | | | | | | | | | |
| Resin-3 | Parts by mass | | | | | | | | | | |
| Resin-4 | Parts by mass | | | | | | | | | | |
| Resin-5 | Parts by mass | 40 | 60 | | | | | | 30 | 20 | |
| Resin-6 | Parts by mass | | | 60 | 60 | 60 | 60 | 60 | 30 | 40 | 60 |
| Silane coupling agent-1 | Parts by mass | 12 | 12 | 12 | 12 | | | | 12 | 12 | |
| Silane coupling agent-2 | Parts by mass | | | | | 12 | 12 | 12 | | | |
| Liquid polymer | Parts by mass | | | | | | 20 | 20 | | | 20 |

EP 4 582 476 A1

|  |  | Example 2-7 | Example 2-8 | Example 2-9 | Example 2-10 | Example 2-11 | Example 2-12 | Example 2-13 | Example 2-14 | Example 2-15 | Example 2-16 |
|---|---|---|---|---|---|---|---|---|---|---|---|
| Oil | Parts by mass | 20 | 20 | 20 | 20 | 20 |  |  | 20 | 20 |  |
| Stearic acid | Parts by mass | 2 | 2 | 2 | 2 | 2 | 2 | 2 | 2 | 2 | 2 |
| Zinc oxide | Parts by mass | 2 | 2 | 2 | 2 | 2 | 2 | 2 | 2 | 2 | 2 |
| Anti-aging agent | Parts by mass | 2 | 2 | 2 | 2 | 2 | 2 | 2 | 2 | 2 | 2 |
| Vulcanization accelerator-1 | Parts by mass | 1.5 | 1.5 | 1.5 | 1.5 | 1.5 | 1.5 | 1.5 | 1.5 | 1.5 | 1.5 |
| Vulcanization accelerator-2 | Parts by mass | 2 | 2 | 2 | 2 | 2 | 2 | 2 | 2 | 2 | 2 |
| Sulfur | Parts by mass | 1.5 | 1.5 | 1.5 | 1.5 | 1.5 | 1.5 | 1.5 | 1.5 | 1.5 | 1.5 |
| Wet grip performance | Index value | 110 | 130 | 124 | 132 | 135 | 140 | 156 | 118 | 120 | 150 |
| Operability | Index value | 97 | 99 | 97 | 95 | 94 | 97 | 99 | 96 | 96 | 98 |
| Wear resistance | Index value | 111 | 102 | 119 | 125 | 118 | 120 | 111 | 114 | 117 | 114 |

EP 4 582 476 A1

Types of raw materials used as indicated in Tables 1 to 3 are described below.

- SBR-1: Styrene-butadiene rubber, Nipol NS522, available from ZS Elastomer Co., Ltd.
- SBR-2: Modified styrene-butadiene rubber, TUFDENE E581 (modified group: hydroxy group), available from Asahi Kasei Corporation
- Silica-1: Ultrasil 7000 GR (nitrogen adsorption specific surface area $N_2SA = 171\ m^2/g$), available from Evonik Industries AG
- Silica-2: Zeosil 1085GR (nitrogen adsorption specific surface area $N_2SA = 86\ m^2/g$), available from Solvey
- CB: Carbon black, SEAST 9 (nitrogen adsorption specific surface area $N_2SA = 142\ m^2/g$), available from Tokai Carbon Co., Ltd.
- Aluminum hydroxide: BF013, available from Nippon Light Metal Co., Ltd.
- Resin-1: Aromatic hydrocarbon resin, Neopolymer 140S, available from JX Energy Corporation
- Resin-2: Aromatic hydrocarbon resin, Neopolymer 170S, available from JX Energy Corporation
- Resin-3: Aromatic hydrocarbon resin, SYLVARES SA140, available from Kraton Corporation
- Resin-4: Aromatic hydrocarbon resin, Endex155, available from Hercules Incorporated
- Resin-5: Aromatic hydrocarbon resin, Sylvatraxx4412, available from Kraton Corporation
- Resin-6: Aromatic hydrocarbon resin, Endex 160, available from Eastman Chemical Company
- Liquid polymer: Low molecular weight styrene-butadiene copolymer, RICON 100, available from Cray Valley
- Oil: Extract No. 4S, available from Shell Lubricants Japan K.K.
- Silane coupling agent-1: Si69, available from Evonik Industries AG
- Silane coupling agent-2: Polysiloxane produced by the following method
- Stearic acid: Beads stearic acid YR, available from NOF Corporation
- Zinc oxide: Zinc Oxide III, available from Seido Chemical Industry Co., Ltd.
- Anti-aging agent: 6PPD, available from Flexsys
- Vulcanization accelerator-1: SANCELER D-G, available from Sanshin Chemical Industry Co., Ltd.
- Vulcanization accelerator-2: NOCCELER CZ-G, available from Ouchi Shinko Chemical Industrial Co., Ltd.
- Sulfur: Golden Flower oil treated sulfur powder, available from Tsurumi Chemical Industry Co., Ltd.

Method for producing silane coupling agent-2

107.8 g (0.2 mol) of bis(triethoxysilylpropyl)tetrasulfide (KBE-846, available from Shin-Etsu Chemical Co., Ltd.), 95.4 g (0.4 mol) of $\gamma$-mercaptopropyl triethoxysilane (KBE-803, available from Shin-Etsu Chemical Co., Ltd.), 442.4 g (1.6 mol) of octyl triethoxysilane (KBE-3083, available from Shin-Etsu Chemical Co., Ltd.), and 162.0 g of ethanol were placed in a 2 separable flask provided with an agitator, a reflux condenser, a dropping funnel and a thermometer, and then a mixed solution containing 32.4 g (1.8 mol) of 0.5 N hydrochloric acid and 75.6 g of ethanol was added in a dropwise manner at room temperature. It was then stirred for 2 hours at 80°C. Then, it was filtered, and 14.6 g of 5% KOH/EtOH solution was added in a dropwise manner, and stirred for 2 hours at 80°C. Then, by vacuum concentration and filtration, 425.4 g of polysiloxane in the form of a brown transparent liquid was obtained. The obtained polysiloxane was designated as "silane coupling agent-2". The average molecular weight is 860 when measured by GPC, and is expressed by the following average compositional formula.

$$(-C_3H_6\text{-}S_4\text{-}C_3H_6\text{-})_{0.083}(-C_8H_{17})_{0.667}(-OC_2H_5)_{1.50}(-C_3H_6SH)_{0.167}SiO_{0.75}$$

[Table 4]

|  | Tg (°C) | Right-hand side (36 × Mw/Mn + 22) of Formula (1) | Mw |
|---|---|---|---|
| Resin-1 | 92 | 94 | 2149 |
| Resin-2 | 105 | 83 | 2161 |
| Resin-3 | 89 | 107 | 4190 |
| Resin-4 | 107 | 112 | 7978 |
| Resin-5 | 91 | 85 | 3797 |
| Resin-6 | 114 | 107 | 11644 |

As is apparent from Table 1, in Examples 1-1 to 1-11, the wet grip performance, the operability, and the wear resistance were improved as compared with Standard Example 1. As is apparent from Tables 2 to 3, in Examples 2-1 to 2-16, the wet grip performance, the operability, and the wear resistance were improved as compared with Standard Example 2.

On the other hand, in Comparative Example 1-1, since silica having a small nitrogen adsorption specific surface area $N_2SA$ (silica having a large particle size) was used, the wear resistance deteriorated. In Comparative Example 1-2, since a resin not satisfying Formula (2) was used, the wear resistance deteriorated. In Comparative Example 1-3, since a resin not satisfying Formula (1) was used, the operability deteriorated. In Comparative Example 1-4, since the resin not satisfying Formula (1) was used, the wear resistance deteriorated. In Comparative Example 2-1, since silica having a small nitrogen adsorption specific surface area $N_2SA$ (silica having a large particle size) was used, the wear resistance deteriorated. In Comparative Example 2-2, since a resin not satisfying Formula (2) was used, the wear resistance deteriorated. In Comparative Example 2-3, since a resin not satisfying Formula (1) was used, the operability deteriorated. In Comparative Example 2-4, since the resin not satisfying Formula (1) was used, the wear resistance deteriorated. In Comparative Example 2-5, a resin satisfying Formulas (1) and (2) was used; however, since the blended amount of the resin was large, the operability and the wear resistance were deteriorated.

The present disclosure includes the following embodiments of the invention.

Invention [1] A rubber composition for a tire of the present invention including, per 100 parts by mass of a diene rubber: from 3 parts by mass to 100 parts by mass of an aromatic hydrocarbon resin satisfying conditions of Formulas (1) and (2) set forth below; and

from 30 parts by mass to 300 parts by mass of silica having a nitrogen adsorption specific surface area $N_2SA$ of from 100 $m^2/g$ to 300 $m^2/g$,

$$Tg > 36 \times Mw/Mn + 22 \ldots (1)$$

$$Mw > 3000 \ldots (2)$$

where Tg is a glass transition temperature [unit: °C], Mw is a weight average molecular weight, and Mn is a number average molecular weight.

Invention [2] The rubber composition for a tire according to Invention [1], including, in 100 mass% of the diene rubber, 30 mass% or more of a modified styrene-butadiene rubber containing a functional group having reactivity with a silanol group on a surface of the silica.

Invention [3] The rubber composition for a tire according to Invention [1] or [2], wherein from 2 mass% to 20 mass% of a silane coupling agent with respect to the silica is preferably blended, the silane coupling agent containing a polysiloxane represented by an average compositional formula of General Formula (3) set forth below:

$$(A)_a(B)_b(C)_c(D)_d(R^1)_e SiO_{(4-2a-b-c-d-e)/2} \cdots \qquad (3)$$

where in Formula (3), A represents a divalent organic group containing a sulfide group, B represents a monovalent hydrocarbon group having from 5 to 10 carbons, C represents a hydrolyzable group, D represents an organic group containing a mercapto group, $R^1$ represents a monovalent hydrocarbon group having from 1 to 4 carbons, and a to e are real numbers satisfying relationship formulas: $0 \leq a < 1$, $0 < b < 1$, $0 < c < 3$, $0 \leq d < 1$, $0 \leq e < 2$, and $0 < 2a + b + c + d + e < 4$.

Invention [4] The rubber composition for a tire according to any one of Inventions [1] to [3], including a liquid aromatic vinyl-conjugated diene rubber having a glass transition temperature of -40°C or higher.

Invention [5] The rubber composition for a tire according to any one of Inventions [1] to [4], wherein, per 100 parts by mass of the diene rubber, 15 parts by mass or more of aluminum hydroxide is blended.

**Claims**

1. A rubber composition for a tire comprising, per 100 parts by mass of a diene rubber:

from 3 parts by mass to 100 parts by mass of an aromatic hydrocarbon resin satisfying conditions of Formulas (1) and (2) set forth below; and
from 30 parts by mass to 300 parts by mass of silica having a nitrogen adsorption specific surface area $N_2SA$ of from 100 $m^2/g$ to 300 $m^2/g$,

$$Tg > 36 \times Mw/Mn + 22 \ldots (1)$$

$$Mw > 3000 \ldots (2)$$

where Tg is a glass transition temperature (unit: °C), Mw is a weight average molecular weight, and Mn is a number average molecular weight.

2. The rubber composition for a tire according to claim 1, comprising, in 100 mass% of the diene rubber, 30 mass% or more of a modified styrene-butadiene rubber containing a functional group having reactivity with a silanol group on a surface of the silica.

3. The rubber composition for a tire according to claim 1 or 2, wherein from 2 mass% to 20 mass% of a silane coupling agent with respect to a mass of the silica is blended, the silane coupling agent containing a polysiloxane represented by an average compositional formula of General Formula (3) set forth below:

$$(A)_a(B)_b(C)_c(D)_d(R^1)_e SiO_{(4-2a-b-c-d-e)/2} \cdots \qquad (3)$$

where in Formula (3), A represents a divalent organic group containing a sulfide group, B represents a monovalent hydrocarbon group having from 5 to 10 carbons, C represents a hydrolyzable group, D represents an organic group containing a mercapto group, $R^1$ represents a monovalent hydrocarbon group having from 1 to 4 carbons, and a to e are real numbers satisfying relationship formulas: $0 \leq a < 1$, $0 < b < 1$, $0 < c < 3$, $0 \leq d < 1$, $0 \leq e < 2$, and $0 < 2a + b + c + d + e < 4$.

4. The rubber composition for a tire according to any one of claims 1 to 3, comprising a liquid aromatic vinyl-conjugated diene rubber having a glass transition temperature of -40°C or higher.

5. The rubber composition for a tire according to any one of claims 1 to 4, wherein, per 100 parts by mass of the diene rubber, 15 parts by mass or more of aluminum hydroxide is blended.

## INTERNATIONAL SEARCH REPORT

| International application No. |
|---|
| **PCT/JP2023/036568** |

| A. | CLASSIFICATION OF SUBJECT MATTER |
|---|---|

*C08L 9/00*(2006.01)i; *B60C 1/00*(2006.01)i; *C08K 3/22*(2006.01)i; *C08K 3/36*(2006.01)i; *C08K 5/548*(2006.01)i; *C08L 9/06*(2006.01)i; *C08L 25/02*(2006.01)i; *C08L 57/02*(2006.01)i
FI: C08L9/00; C08K3/36; C08L25/02; C08L57/02; C08K5/548; C08L9/06; C08K3/22; B60C1/00 A

According to International Patent Classification (IPC) or to both national classification and IPC

| B. | FIELDS SEARCHED |
|---|---|

Minimum documentation searched (classification system followed by classification symbols)

C08L1/00-101/14; C08K3/00-13/08; B60C1/00-19/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2006-274046 A (BRIDGESTONE CORP) 12 October 2006 (2006-10-12) claims 1, 9, paragraphs [0007], [0018], [0045], [0053], [0065]-[0066], [0068], [0070]-[0072], tables 1-2, composition 2, example 3 | 1-2 |
| Y | | 3-5 |
| Y | JP 2017-052883 A (YOKOHAMA RUBBER CO LTD) 16 March 2017 (2017-03-16) claims 1-4, paragraphs [0005], [0036]-[0040], table 1 | 3 |
| A | | 1-2, 4-5 |
| Y | WO 2021/256124 A1 (SUMITOMO RUBBER INDUSTRIES, LTD.) 23 December 2021 (2021-12-23) claim 1, paragraphs [0089], [0093], [0105], [0131], [0139]-[0140], tables 1-2, example 5 | 4-5 |
| A | | 1-3 |
| A | JP 2011-094012 A (SUMITOMO RUBBER INDUSTRIES, LTD.) 12 May 2011 (2011-05-12) entire text | 1-5 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/036568** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2010-270298 A (BRIDGESTONE CORP) 02 December 2010 (2010-12-02)<br>entire text | 1-5 |
| A | JP 2017-132984 A (THE GOODYEAR TIRE & RUBBER COMPANY) 03 August 2017 (2017-08-03)<br>entire text | 1-5 |

Form PCT/ISA/210 (second sheet) (January 2015)

INTERNATIONAL SEARCH REPORT
Information on patent family members

International application No.

**PCT/JP2023/036568**

| Patent document cited in search report | | | Publication date (day/month/year) | Patent family member(s) | | | Publication date (day/month/year) |
|---|---|---|---|---|---|---|---|
| JP | 2006-274046 | A | 12 October 2006 | (Family: none) | | | |
| JP | 2017-052883 | A | 16 March 2017 | (Family: none) | | | |
| WO | 2021/256124 | A1 | 23 December 2021 | EP | 4166349 | A1 | |
| | | | | claim 1, paragraphs [0092], [0096], [0108], [0134], [0136], tables 1-2, example 5 | | | |
| | | | | CN | 115697725 | A | |
| JP | 2011-094012 | A | 12 May 2011 | (Family: none) | | | |
| JP | 2010-270298 | A | 02 December 2010 | (Family: none) | | | |
| JP | 2017-132984 | A | 03 August 2017 | US | 2017/0145195 | A1 | |
| | | | | entire text | | | |
| | | | | EP | 3170680 | A1 | |
| | | | | KR | 10-2017-0059406 | A | |
| | | | | CN | 106905575 | A | |
| | | | | RU | 2016145062 | A | |
| | | | | CA | 2947703 | A1 | |

Form PCT/ISA/210 (patent family annex) (January 2015)

**EP 4 582 476 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5503159 B